# EUROPÄISCHE PATENTANMELDUNG

(11) **EP 1 983 314 A2**
(43) Veröffentlichungstag der Anmeldung: **22.10.2008**
(21) Anmeldenummer: 08007479.2
(22) Anmeldetag: 17.04.2008
(51) Int. Cl.: G01G 19/08, G01G 23/00

(54) **An-Board-Waage für Abrollcontainer**

(30) Priorität: 20.04.2007 AT 616072007
(71) Anmelder: Öllinger, Karl, 4020 Linz (AT)
(72) Erfinder: Öllinger, Karl, 4020 Linz (AT)

(57) **Zusammenfassung**

Es wird eine Onboardwaage für Abrollcontainer beschrieben welche sich im wesentlichen aus dem Lastträger (9)(3)(10), dem Grundrahmen (1)(8)(10), einer Wägezelle (6) sowie den Lenkerblechen (2) zusammensetzt. 4 oder mehr dieser Lastecken bilden gemeinsam mit Gewichtsanzeige und Abgleichbox die eigentliche Waage. Die Waage kommt ohne Hydraulik aus und ist fehlersicher und einfach zu bedienen. Die Querkräfte und Kraftnebenschlüsse werden durch die Lenkerbleche(2) abgefangen.

## Beschreibung

### 1. Beschreibungseinleitung

Die Erfindung betrifft eine Onboardwaage für Abrollcontainer, bestehend aus 4, oder mehr Lastecken (20) und einer Gewichtsanzeige, dadurch gekennzeichnet dass der Abrollcontainer (24) immer auf den Lastecken (20) aufliegt, die seitlichen Kräfte wie z.B. Bremskräfte, Temperaturspannungen, Kurvenkräfte usw., welche auf die Wägezellen (6) wirken durch Lenkerbleche (2) in Form von Biegelagem abgefangen werden und dass das Wiegesystem gänzlich ohne Hydraulik auskommt.

### 2. Stand der Technik

Es sind Onboardwaagen für Abrollcontainer bekannt bei denen zur Ermittlung des Containergewichts der zu wägende Abrollcontainer mit hydraulischen Wiegeelementen angehoben werden muss.
Nachteile dieser Systeme sind.
- Der sehr aufwendige Einbau, da diese neben dem mechanischen Einbau auch in die Hydraulik des Fahrzeuges eingebunden werden müssen.
   Der Einbau ist insbesondere bei nachträglichem Einbau sehr problematisch.
- Durch die in der Regel als Pendel oder Kugelfüße ausgeführten Krafteinleitungen kommt es einerseits bei verbogenen Containergrundrahmen als auch bei Schrägstellung des Fahrzeuges zu Verspannungen der Lastelemente untereinander und somit zu Fehlwägungen.
- Bei ausfahren der Hydraulikelementen ohne vorheriges Lösen der Container- Transportsicherung kommt es regelmäßig zu Beschädigung von Wiegeelementen und Hydraulikzylindern.
- Durch ungleichmäßiges ausfahren der Hydraulikzylinder kommt es immer wieder zu Überlastungen der Wiegekomponenten oder zu Wiegefehlern.

### 3. Aufgabe der Erfindung

Die Aufgabe der Erfindung ist es eine Waage für die Montage am Fahrzeug zu konstruieren welche eine genaue Gewichtsermittlung auch bei Schrägstellung des Fahrzeuges sowie bei beschädigten Abrollcontainern gewährleistet und nach Möglichkeit die Beschädigung des Systems durch Bedienungsfehler minimiert. Ferner Soll die Waage keine Hydraulikkomponenten benötigen.

### 4. Lösung der gestellten Aufgabe

Die Aufgabe wird dadurch gelöst, dass der Abrollcontainer (24) immer auf den Lastecken (20) aufliegt, die seitlichen Kräfte wie z. B. Bremskräfte, Temperaturspannungen, Kurvenkräfte usw., welche auf die Wiegezellen (6) wirken durch Lenkerbleche (2) abgefangen werden, die Lastecken (20) nur durch den Rahmen des Fahrzeuges (25) bzw. den Hilfsrahmen miteinander verbunden sind, also keine Verbindung der Lastträger (3)(9)(10) zueinander besteht und das Wiegesystem gänzlich ohne Hydraulik auskommt.

### 5. Effekte der Erfindung und Unteransprüche

Durch die horizontale Anordnung der Lenkerbleche(2) seitlich oberhalb und seitlich unterhalb der Wiegezellen(6) werden alle horizontalen Kräfte abgefangen. Gleichzeitig wird durch die in vertikaler Richtung weich auslenkenden Lenkerbleche(2) und dem minimalem Weg moderner DMS - Wägezellen(6) unter Krafteinfluss, erreicht dass die Kraftnebenschlüsse gering sind und somit ausgezeichnete Wiegeergebnisse erzielt werden könne. Dies insbesondere auch bei Schrägstellung des Fahrzeuges(25) oder bei schräger Krafteinleitung durch einen verbognen Grundrahmen des zu wägenden Abrollcontainers(24).
Durch einen gänzlichen Verzicht von Hydraulikzylindern ist der Einbauaufwand des Systems wesentlich geringer als bei bekannten Systemen. Die Möglichkeiten der Beschädigung durch Bedienungsfehler ist nahezu ausgeschlossen. Die Bedienung ist einfach und Fehlwägungen durch Bedienungsfehler sind daher sehr unwahrscheinlich.

### 6. Aufzählung und Kurzbeschreibung der gegebenenfalls vorhandenen Zeichnungsfiguren

Fig. 1 zeigt den Schrägriss einer Lastecke der Onboardwaage für Abrollcontainer
Fig. 2 zeigt den Aufriss, den Grundriss und den Kreuzriss einer Lastecke
Fig. 3 zeigt den Lastträger einer Lastecke
Fig. 4 zeigt den Grundrahmen einer Lastecke
Fig. 5 zeigt den Schnitt durch eine Lastecke
Fig. 6 zeigt den Kraftfluss durch eine Lastecke
Fig. 7 zeigt den Einbau der Lastecken im Fahrzeug

### 7. Figurenbeschreibung

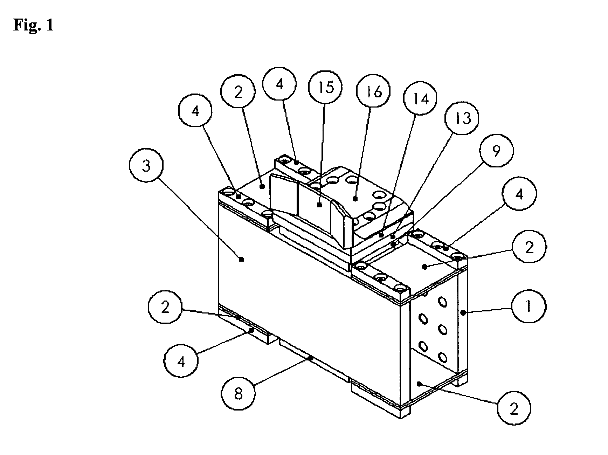

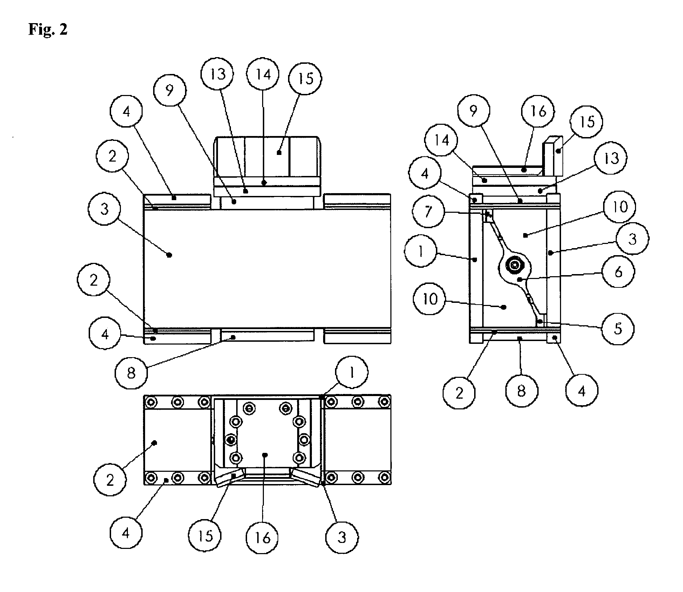

Wie aus Fig. 1 und 2 ersichtlich besteht die Lastecke (20) aus einem Grundrahmen (1)(8)(10) welcher aus der Grundplatte (1) dem Wägezellenträgerblech (8) sowie zwei Rippen (10) gebildet wird, einem Lastträger (3)(9)(10) welcher aus der Lastplatte (3) der Lastkopfplatte (9) und zwei Rippen (10) gebildet wird, sowie den Lenkerblechen (2) den Biegelagerklemmleisten (4), der Wägezelle (6), den Wägezellenlagern (5) und (7), Distanzplatten(13) und (14), einem Queranschlag(15) sowie der Gleitplatte (16).

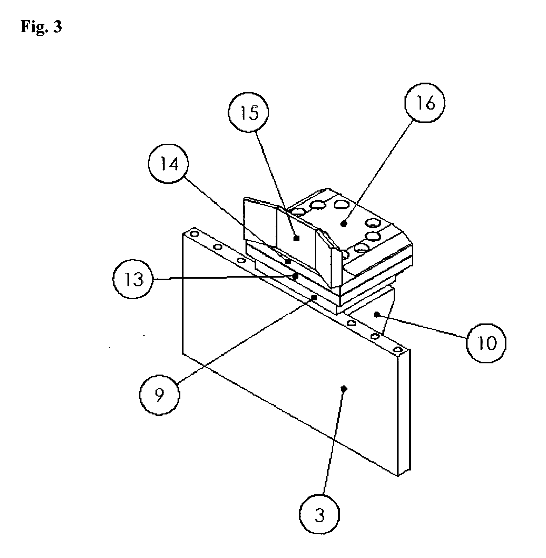

Wie Fig. 3 zeigt setzt sich der Lastträger aus der Lastplatte (3), der Lastträgerkopfplatte (9) und den beiden Rippen (10) zusammen. Direkt am Lastträger montiert sind die Distanzplatte (13) und (14), die Gleitplatte (16) und der Queranschlag (15).

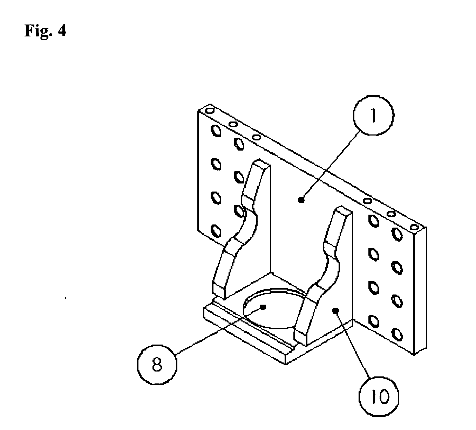

Wie Fig. 4 zeigt setzt sich der Grundrahmen aus der Grundplatte (1), dem Wägezellenträger (8) und den beiden Rippen (10) zusammen.

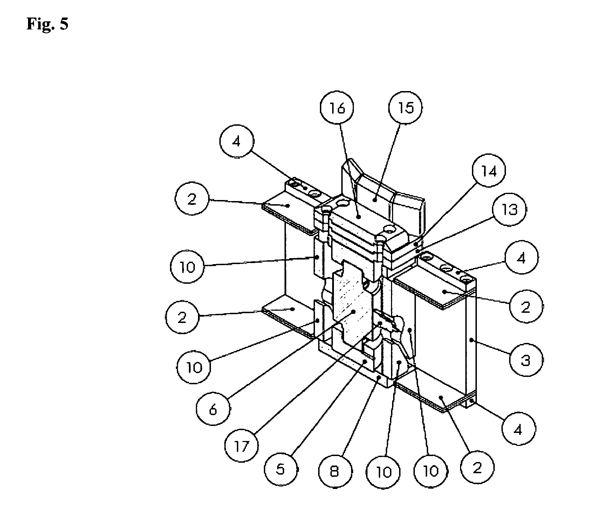

Wie Fig. 5 zeigt ist die in den Lastecken eingebaute Wägezelle (6) gemeinsam mit den Kalotten (5) und (7) als Pendelstütze ausgeführt.

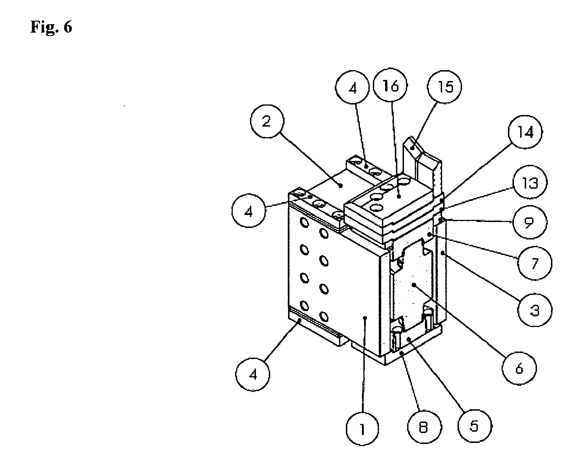

Wie aus Fig.5 und 6 ersichtlich erfolgt die Kraftübertragung vom Container über die Gleitbleche (16) direkt auf den Lastträger (3)(9)(10) in die Wägezelle (6) welche wiederum vom Grundrahmen (1)(8)(10) getragen wird. Ein seitliches Ausweichen wird durch die Biegelager (2) verhindert. Die Biegelager(2) bilden gemeinsam mit dem Grundrahmen(1)(8)(10) und dem Lastträger(3)(9)(10) ein Kraftparallelogramm welches einerseits immer eine gerade Krafteinleitung in die Wägezelle (6) gewährleistet und gemeinsam mit den Wägezellenlagern (5) und (7) und der als Pendelstütze ausgeführten Wägezelle (6) Kraftnebenschlüsse weitestgehend vermeidet.

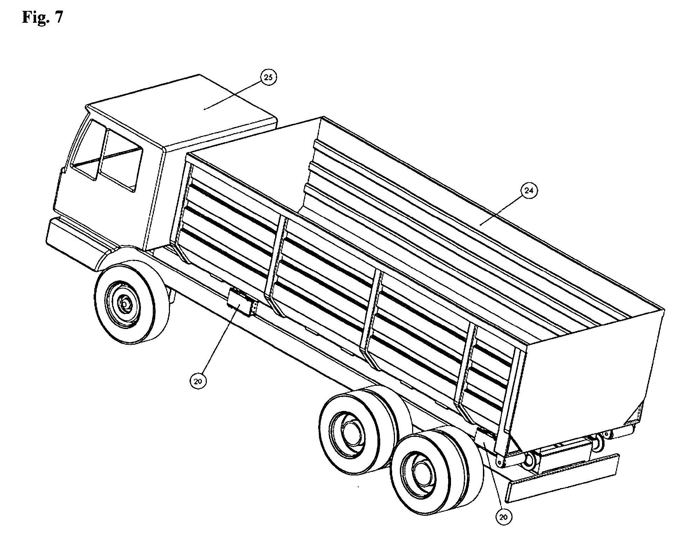

Wie aus Fig. 7 ersichtlich besteht die Abrollcontainerwaage aus vier oder mehr Lastecken (20) der oben beschriebenen Bauart welche fix mit dem Haupt oder Hilfsrahmen des Fahrzeuges (25) verschraubt werden. Der Container liegt auch während der Fahrt immer auf den Lastecken auf.

## Patentansprüche

1. Onboardwaage zur Gewichtsermittlung für Abrollcontainern (24) auf Fahrzeugen (25) mittels 4 oder mehr Lastecken (20) die aus je mindestens einem Grundrahmen (1)(8)(10), einem Lastträger (3)(9(10) und einer Wägezelle (6) bestehen, wobei in den Lastecken (20), Lenkerbleche (2), insbesondere Biegelager, vorhanden sind,
**dadurch gekennzeichnet, dass**
die in den Lastecken (20) befindlichen Lenkerbleche (2) horizontal angeordnet sind und damit seitlich wirkende Kräfte, wie z. B. Bremskräfte, Temperaturspannungen, Kurvenkräfte usw. aufnehmen können und **dadurch** auf die Wägezellen (6) nur die zu bestimmenden senkrecht wirkenden Gewichtskräfte wirken.

2. Onboardwaage nach Anspruch 1,
**dadurch gekennzeichnet, dass**
oberhalb und unterhalb der Wägezellen (6) mindestens je ein Lenkerblech (2) vorhanden ist, wobei die Lenkerbleche (2) zusammen mit dem Grundrahmen (1)(8)(10), und dem Lastträger (3)(9)(10) ein Parallelogramm bilden, welches eine exakte und geradlinige Krafteinleitung durch eine Eliminierung der Querkräfte gewährleistet, und somit optimale Wägeergebnisse auch bei Schrägstellung des Fahrzeuges (25) oder beschädigten Abrollcontainer (24) oder schräger bzw. exzentrischer Krafteinleitung erzielt werden.

3. Onboardwaage nach einen der Ansprüche 1 - 2
**dadurch gekennzeichnet, dass**
die auf dem Fahrzeug beförderten Abrollcontainer (24) nicht nur während dem Wägevorgang sondern auch während der Fahrt auf den Lastecken (20) aufliegen.

4. Onboardwaage nach einen der Ansprüche 1 - 3
**dadurch gekennzeichnet, dass**
die Lastecken (20) einzeln auf dem Rahmen des Fahrzeuges (25) befestigt sind und somit keine direkte Verbindung zwischen den einzelnen Lastträgern (3)(9)(10) nötig ist.

5. Onboardwaage nach einen der Ansprüche 1 - 4
**dadurch gekennzeichnet, dass**
in den Lastecken (20) Wägezellen (6), insbesondere DMS-Wägezellen, zur Gewichtsermittlung verwendet werden und damit keine Hydraulik zur Messung benötigt wird.

6. Onboardwaage nach einen der Ansprüche 1 - 5
**dadurch gekennzeichnet, dass**
die auf dem Fahrzeug (25) beförderten Abrollcontainer (24) immer auf den Lastecken (20) aufliegen und damit kein Anheben der Wägezellen vor dem Wägevorgang erforderlich ist.
